(19) Europäisches Patentamt
European Patent Office
Office européen des brevets

(11) EP 1 117 534 B1

(12) EUROPÄISCHE PATENTSCHRIFT

(45) Veröffentlichungstag und Bekanntmachung des Hinweises auf die Patenterteilung:
**03.11.2004 Patentblatt 2004/45**

(21) Anmeldenummer: **99942858.4**

(22) Anmeldetag: **11.08.1999**

(51) Int Cl.[7]: **B32B 27/18**, B32B 27/32, B65D 65/40

(86) Internationale Anmeldenummer:
**PCT/EP1999/005910**

(87) Internationale Veröffentlichungsnummer:
**WO 2000/009329 (24.02.2000 Gazette 2000/08)**

(54) **MEHRSCHICHTIGE BIAXIAL ORIENTIERTE POLYPROPYLENFOLIE MIT VERBESSERTER BARRIERE, VERFAHREN ZU IHRER HERSTELLUNG UND IHRE VERWENDUNG**

MULTI-LAYER BIAXIALLY ORIENTED POLYPROPYLENE FILM HAVING AN IMPROVED BARRIER, A METHOD FOR THE PRODUCTION THEREOF, AND THE USE THEREOF

FEUILLE DE POLYPROPYLENE MULTICOUCHE A ORIENTATION BIAXIALE, PRESENTANT DES PROPRIETES BARRIERE AMELIOREES, SON PROCEDE DE PRODUCTION ET SON UTILISATION

(84) Benannte Vertragsstaaten:
**AT BE CH CY DE DK ES FI FR GB GR IE IT LI LU MC NL PT SE**

(30) Priorität: **13.08.1998 DE 19836657**

(43) Veröffentlichungstag der Anmeldung:
**25.07.2001 Patentblatt 2001/30**

(73) Patentinhaber: **Treofan Germany GmbH & Co.KG**
**66539 Neunkirchen (DE)**

(72) Erfinder:
- **SPEITH-HERFURTH, Angela**
**D-63329 Egelsbach (DE)**
- **BUNK, Stefan**
**D-66346 Püttlingen (DE)**
- **HANSOHN, Robert**
**D-66459 Kirkel (DE)**

(74) Vertreter: **Luderschmidt, Schüler & Partner GbR**
**Patentanwälte,**
**John-F.-Kennedy-Strasse 4**
**65189 Wiesbaden (DE)**

(56) Entgegenhaltungen:
**EP-A- 0 594 083**
**WO-A-99/03673**
**US-A- 5 141 801**
**WO-A-96/27491**
**WO-A-99/10172**

EP 1 117 534 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine mehrschichtige biaxial orientierte Polypropylenfolie aus einer Basisschicht und zwei siegelfähigen Deckschichten und zwei Zwischenschichten gemäß einem Schichtaufbau DZBZD, welche in ihren Zwischenschichten Wachs enthält

Die Verbesserung der Barriereeigenschaften von Folien, insbesondere von Folien für den Verpackungssektor, hat in letzter Zeit an Bedeutung zugenommen. Aus Kosten- und aus Umweltgründen wünscht die Verpackungsindustrie immer dünnere Folien bei gleichbleibenden bzw. verbesserten Barriereeigenschaften, insbesondere hinsichtlich Durchtritt von Wasserdampf.

Die Barriere von boPP-Folien hinsichtlich Wasserdampf (WDD) und Sauerstoff (SDD) nimmt mit der Foliendicke ab. Im üblichen Dickenbereich von boPP-Folien (4 bis 100 µm) besteht zwischen der Wasserdampfbarriere (WDD) und der Dicke (d) näherungsweise ein hyperbolischer Zusammenhang (WDD x d = const.). Die Konstante hängt im wesentlichen von der Rohstoffzusammensetzung und den Streckbedingungen ab. Für boPP-Verpackungsfolien nach dem Stand der Technik hat die Konstante einen Wert von etwa: const. = 28 $g \times mm/m^2 \times d$. Die Wasserdampfdurchlässigkeit wurde hierbei nach DIN 53 122 gemessen.

In der US-A-4,921,749 (= EP-A-0 247 898) wird eine siegelfähige boPP-Folie mit verbesserten mechanischen und optischen Eigenschaften beschrieben. Ebenfalls verbessert sind die Siegelbarkeit der Folie und die Durchlässigkeit für Wasserdampf und Sauerstoff. Sämtliche Verbesserungen resultieren aus der Zugabe eines niedrigmolekularen Harzes in die Basisschicht. Der Harzanteil beträgt dabei zwischen 3 und 30 Gew.-%. Das Harz hat ein Molekulargewicht deutlich kleiner als 5 000, bevorzugt kleiner als 1 000, und beträgt beispielsweise 600. Der Erweichungspunkt des Harzes liegt bei 120 bis 140 °C.

Die US 5,155,160 beschreibt die Verbesserung der Barriereeigenschaften durch die Zugabe von Wachs in nicht orientierten Polypropylenfolien. Als Wachse werden Paraffinwachse und Polyethylenwachse mit einem Molekulargewicht von 300 bis 800 beschrieben. Die Barriere soll unter 0,2 g/100 square inches /24 hours liegen.

Es besteht ein kontinuierlicher Bedarf die Wasserdampfbarriere von biaxial orientierten Verpackungsfolien aus Polypropylen weiter zu verbessern. Alle bisher bekannten Methoden reduzieren die Wasserdampfbarriere noch nicht in dem gewünschten Maße oder beeinträchtigen andere wesentliche Folieneigenschaften in nicht akzeptabler Weise.

Die Aufgabe der vorliegenden Erfindung bestand daher darin, eine biaxial orientierte Polypropylenfolie zur Verfügung zu stellen, die sich durch eine gute Barriere, insbesondere gegenüber Wasserdampf auszeichnet und gute mechanische Eigenschaften aufweist. Die Folie muß lauf- und verfahrenssicher bei Produktionsgeschwindigkeiten von bis zu 400 m/min herstellbar sein. Andere physikalische Folieneigenschaften, die im Hinblick auf ihre Verwendung als Verpackungsfolie gefordert sind, dürfen nicht nachteilig beeinflußt werden. Die Folie soll einen hohen Glanz, keine optischen Defekte in Form von Stippen oder Blasen, eine gute Kratzfestigkeit, bei einer niedrigen Foliendicke einen störungsfreien Lauf auf schnellaufenden Verpackungsmaschinen und für transparente Ausführungsformen eine niedrige Folientrübung aufweisen. Darüber hinaus dürfen die Siegeleigenschaften nicht nachteilig beeinflußt werden.

Diese Aufgabe wird erfindungsgemäß gelöst durch eine Polypropylen-Mehrschichtfolie der eingangs genannten Gattung, deren kennzeichnendes Merkmal darin besteht, daß die Zwischenschicht ein Wachs mit einem mittleren Molekulargewicht (Zahlenmittel) Mn von 200 bis 1200 enthält.

Die Folie besteht aus einer Basisschicht B, beidseitig darauf aufgebrachten Zwischenschichten Z und auf den Zwischenschichten aufgebrachten Deckschichten D, d. h. einem fünfschichtigen symmetrischen Aufbau DZBZD.

Die Basisschicht der Folie enthält 70 bis 100 Gew.-%, vorzugsweise 75 bis 98 Gew.-%, insbesondere 80 bis 95 Gew.-%, jeweils bezogen auf die Basisschicht, eines nachstehend beschriebenen Propylenpolymeren.

Dieses Propylenpolymer enthält mindestens 90 Gew.-%, vorzugsweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenpolymere.

Unter den vorstehend genannten Propylenpolymeren sind isotaktische Propylenhomopolymere für die Basisschicht bevorzugt. Im allgemeinen hat das Propylenhomopolymere einen Schmelzpunkt von 140 bis 170 °C, vorzugsweise von 150 bis 165 °C, und einen Schmelzflußindex (Messung DIN 53 735 bei 21,6 N Belastung und 230 °C) von 1,5 bis 20 g/10 min, vorzugsweise von 2 bis 15 g/10 min. Der n-heptanlösliche Anteil des isotaktischen Polymeren beträgt im allgemeinen 1 bis 6 Gew.-%, bezogen auf das Polymere.

In einer bevorzugten Ausführungsform der Erfindung ist das eingesetzte Propylenhomopolymere hochisotaktisch. Für derartige hochisotaktische Propylenhomopolymere beträgt der mittels $^{13}$C-NMR-Spektroskopie bestimmte Kettenisotaxie-Index des n-heptanunlöslichen Anteils des Polypropylens mindestens 95 %, vorzugsweise 96 bis 99 %.

In einer weiteren bevorzugten Ausführungsform der erfindungsgemäßen Folie wird das Propylenhomopolymeren der Basisschicht peroxidisch abgebaut.

Ein Maß für den Grad des Abbaus des Polymeren ist der sogenannte Abbaufaktor A, welcher die relative

Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymeren vor dem Zusatz des organischen Peroxids

$MFI_2$ =Schmelzflußindex des peroxidisch abgebauten Propylenpolymeren

Im allgemeinen liegt der Abbaufaktor A des eingesetzten Propylenpolymeren in einem Bereich von 1,5 bis 15, vorzugsweise 1,5 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-tbutylperoxid bevorzugt.

Im allgemeinen enthält die Basisschicht übliche Stabilisatoren und Neutralisationsmittel in jeweils wirksamen Mengen sowie gegebenenfalls Antistatikum und/oder Kohlenwasserstoffharz. Alle nachstehenden Angaben in Gew.-% beziehen sich auf das Gewicht der Basisschicht.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische Stabilisatoren, phosphitische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10µm und einer spezifischen Oberfläche von mindestens 40 $m^2/g$. Im allgemeinen enthält die Folie 0,02 bis 2 Gew.-%, vorzugsweise 0,03 bis 1 Gew.-% Neutralisationsmittel.

Bevorzugte Antistatika sind die im wesentlichen geradkettigen und gesättigten aliphatischen, tertiären Amine mit einem aliphatischen Rest mit 10 bis 20 Kohlenstoffatomen, die mit w-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Weiterhin sind als Antistatika Monoester aus Glycerin und aliphatischen Fettsäuren geeignet, wobei Fettsäurereste mit 10 bis 20 Kohlenstoffatomen bevorzugt sind. Insbesondere ist Glycerinmonostearat bevorzugt.

Die harzmodifizierten Ausführungsformen enthalten das Harz in einer Menge von 1 bis 20 Gew.-%, vorzugsweise 1 bis 12 Gew.-%, insbesondere 1 bis 10 Gew.-%. bezogen auf das Gewicht der Basisschicht.

Kohlenwasserstoffharze sind niedermolekulare Polymere, deren mittleres Molekulargewicht (Gewichtsmittel) im allgemeinen in einem Bereich von 300 bis 8 000, vorzugsweise 400 bis 5 000, vorzugsweise 500 bis 2 000, liegt. Damit ist das mittlere Molekulargewicht der Harze deutlich niedriger als das der Propylenpolymeren, welche die Hauptkomponente der einzelnen Folienschichten bilden und im allgemeinen ein mittleres Molekulargewicht von über 100 000 haben.

Als Harze sind Kohlenwasserstoffharze bevorzugt, welche gegebenenfalls teilweise und vorzugsweise vollständig hydriert sind. Als Harze kommen grundsätzlich synthetische Harze oder Harze natürlichen Ursprungs in Frage. Es hat sich als besonders vorteilhaft erwiesen, Harze mit einem Erweichungspunkt von >80 °C (gemessen nach DIN 1995-U4 bzw. ASTM E-28) einzusetzen, wobei solche mit einem Erweichungspunkt von 100 bis 180 °C, insbesondere 120 bis 160 °C, bevorzugt sind.

Unter den zahlreichen Harzen sind Kohlenwasserstoffharze in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben) bevorzugt.

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder

Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, a-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 120°C eingesetzt (bei den ungesättigten Polymerisaten ist das hydrierte Produkt bevorzugt). Ganz besonders bevorzugt werden die Cyclopentadienpolymerisate mit einem Erweichungspunkt von mindestens 125°C oder Copolymerisate aus a-Methylstyrol und Vinyltoluol mit einem Erweichungspunkt von 110 bis 160 °C in der Basisschicht eingesetzt.

In einer weißen oder opaken bzw. weiß/opaken Ausführungsform der erfindungsgemäßen Folie enthält die Basisschicht zusätzlich Pigmente und/oder vakuoleniniziierende Teilchen. Solche Folien haben eine Lichtdurchlässigkeit nach ASTM-D 1033-77 von höchstens 50 %. vorzugsweise von höchstens 70 %.

Pigmente umfassen solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 µm gebunden und umfaßt sowohl sogenannte "Weißpigmente", welche die Folien weiß einfärben, als auch "Buntpigmente". Die Basisschicht enthält Pigmente im allgemeinen in einer Menge von 1 bis 25 Gew.-%, vorzugsweise 2 bis 15 Gew.-%, jeweils bezogen auf die Basisschicht.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum). Siliciumdioxid und Titandioxid, worunter Weißpigmente wie Calciumcarbonat, Siliciumdioxid, Titandioxid und Bariumsulfat bevorzugt eingesetzt werden.

Opake Ausführungsformen der Folien gemäß Anspruch 2 enthalten vakuoleniniziierende Teilchen, welche mit der Polymermatrix unverträglich sind und beim Verstrecken der Folien zur Bildung von vakuolenartigen Hohlräumen führen, wobei Größe, Art und Anzahl der Vakuolen vom Material und von der Größe der festen Teilchen und den Streckbedingungen wie Streckverhältnis und Strecktemperatur abhängig sind. Die Vakuolen geben den Folien ein charakteristisches perlmuttartiges, opakes Aussehen, welches durch Lichtstreuung an den Grenzflächen Vakuole/Polymermatrix entsteht. Im allgemeinen beträgt der mittlere Teilchendurchmesser der vakuoleniniziierenden Teilchen 1 bis 6 µm, vorzugsweise 1,5 bis 5µm. Die Basisschicht enthält vakuoleniniziierende Teilchen im allgemeinen in einer Menge von 1 bis 25 Gew.-%.

Übliche vakuoleniniziierende Teilchen der Basisschicht sind anorganische und/oder organische, mit Polypropylen unverträgliche Materialien wie - Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Polyester, Polystyrole, Polyamide, halogenierte organische Polymere, wobei Polyester wie beispielsweise Polybutylen- oder Polyethylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Weiß/opake Folien, welche mit vakuoleniniziierenden Teilchen und mit Pigment ausgerüstet sind, enthalten die vakuoleniniziierenden Teilchen in einer Menge von 1 bis 10 Gew.-%, bevorzugt 1 bis 5 Gew.-%, und Pigmente in einer Menge von 1 bis 7 Gew.-%, bevorzugt 1 bis 5 Gew.-%.

Die Dichte der opaken bzw. weißen Folien kann innerhalb weiter Grenzen variieren und hängt von der Art und der Menge der Füllstoffe ab. Die Dichte liegt im allgemeinen im Bereich von 0,4 bis 1,1 g/cm$^3$. Pigmentierte Folien haben eine Dichte in der Größenordnung von 0,9 g/cm$^3$ oder darüber, vorzugsweise im Bereich von 0,9 bis 1,1 g/cm$^3$. Folien, welche nur vakuoleniniziierende Teilchen enthalten, haben eine Dichte von kleiner 0,9 g/cm$^3$. Für Verpackungsfolien mit einem Gehalt an vakuoleniniziierenden Teilchen von 2 bis 5 Gew.-% liegt die Dichte im Bereich von 0,6 bis 0,85 g/cm$^3$. Für Folien mit einem Gehalt an vakuoleniniziierenden Teilchen von 5 bis 14 Gew.-% liegt die Dichte im Bereich von 0,4 bis 0,8 g/cm$^3$. Folien, welche Pigmente und vakuoleniniziierende Teilchen enthalten, haben eine Dichte im Bereich von 0,5 bis 0,85 g/cm$^3$, je nach Verhältnis von Pigmentgehalt zu Gehalt an vakuoleniniziierenden Teilchen.

Die erfindungsgemäße Polypropylenfolie umfaßt weiterhin auf der Basisschicht aufgebrachte Zwischenschichten aus Co-oder Terpolymeren aus Olefinen mit 2 bis 4 Kohtenstoffatomen.

Beispiele für derartige olefinische Polymere sind

ein Copolymer von

Ethylen und Propylen oder
Ethylen und Butylen-1 oder
Propylen und Butylen-1 oder

ein Terpolymer von

Ethylen und Propylen und Butylen-1 oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit

einem Ethylengehalt von 1 bis 10 Gew.-%, bevorzugt 2,5 bis 8 Gew.%, oder

statistische Propylen-Butylen-1-Copolymere mit

einem Butylengehalt von 2 bis 25 Gew.-%, bevorzugt 4 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder

ein Blend aus einem Ethylen-Propylen-Butylen-1-Terpolymeren und
einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,

jeweils bezogen auf das Gesamtgewicht des Polymerblends, bevorzugt sind.

Das in der Zwischenschicht eingesetzte Propylenhomopolymere ist ein isotaktisches Homopolypropylen mit einem n-heptanlöslichen Anteil von 6 Gew.-% und weniger, bezogen auf das isotaktische Homopolypropylen. Das Homopolymere hat im allgemeinen einen Schmelzflußindex von 1,5 g/10 min bis 20 g/10 min, vorzugsweise 2,0 g/10 min bis 15 g/10 min. In einer bevorzugten Ausführungsform der Erfindung ist das in der Zwischenschicht eingesetzte Propylenhomopolymer hochisotaktisch. Für derartige hochisotaktische Propylenhomopolymer beträgt der mittels $^{13}C$-NMR-Spektroskopie bestimmte Kettenisotaxie-Index des n-heptanunlöslichen Anteils des Polypropylens mindestens 95 %, vorzugsweise 96 bis 99 %.

Die in der Zwischenschicht eingesetzten vorstehend beschriebenen Co- oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Cound Terpolymeren hat einen Schmelzflußindex von 5 bis 9 g/10 min und einen Schmelzpunkt von 120 bis 150°C. Alle vorstehend angegebenen Schmelzflußindices werden bei 230 °C und einer Kraft von 21,6 N (DIN 53 735) gemessen.

Gegebenenfalls können alle vorstehend beschriebenen Zwischenschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Zwischenschichtpolymeren liegt im allgemeinen in einem Bereich von 1,5 bis 15, vorzugsweise 1,5 bis 10.

Erfindungsgemäß enthält die Folie in ihren Zwischenschichten ein Wachs zur Verbesserung der Wasserdampfbarriere. Es wurde gefunden, daß die gewünschte Barrierewirkung besonders effektiv ist, wenn eine gewisse Mindestmenge an Wachs, bezogen auf das Gesamtgewicht der Folie, nicht unterschritten wird, wobei diese Mindestmenge unter anderem von der Foliendicke abhängig ist.

Folien mit einer Gesamtdicke von bis zu 25 µm sollen vorteilhafter Weise mindesten 0,5 Gew.-% Wachs, bezogen auf das Gewicht der Folie enthalten. Folien mit einer Gesamtdicke von >25 bis 60 µm sollen vorteilhafter Weise mindesten 0,2 Gew.-% Wachs, bezogen auf das Gewicht der Folie enthalten. Folien mit einer Gesamtdicke von >60 µm sollen vorteilhafter Weise mindestens 0,1 Gew.-% Wachs, bezogen auf das Gewicht der Folie enthalten.

Diese, je nach Foliendicke ausgewählte vorteilhafte Wachsmenge wird erfindungsgemäß der/den Zwischenschicht/en zugesetzt. Überraschenderweise ist es dadurch möglich, die Absolutmenge an Wachs in der Folie zur Erzielung guter Barrierewerte stark zu verringern. Dadurch wird eine Beeinträchtigung anderer Folieneigenschaften vermieden.

Die vorstehend angegebenen auf das Gewicht der Folie bezogenen Mindestmengen an Wachs können entweder durch die entsprechende Konzentration an Wachs in der Zwischenschicht oder durch eine variierende Dicke der Zwischenschicht bei gegebener Wachskonzentration auf den effektivsten Bereich eingestellt werden. Somit können sowohl die Wachskonzentration in der Zwischenschicht als auch die Dicke der Zwischenschicht in weiten Bereichen varriert werden, wobei diese beiden Parameter aber nicht völlig unabhängig voneinander gewählt werden können. Es ist darauf zu achten, daß die vorteilhaften Mindestmengen an Wachs, bezogen auf die Folie, erreicht werden.

Die Zwischenschicht enthält im allgemeinen 3 bis 40 Gew.-%, vorzugsweise 5 bis 30 Gew.-%, Wachs bezogen auf das Gewicht der Zwischenschicht, wobei wie bereits betont die Menge an Wachs vorteilhaft so gewählt werden muß, daß die Folie - wie oben beschrieben - insgesamt die Mindestmenge an Wachs in Abhängigkeit ihrer Gesamtdicke enthält.

Die Dicke der Zwischenschicht liegt im allgemeinen in einem Bereich von 0,2 bis 10 µm. vorzugsweise im Bereich von 0,4 bis 5 µm. insbesondere im Bereich von 0,5 bis 3 µm, wobei die Dicke der Zwischenschicht nach den vorstehend erläuterten Kriterien ausgewählt wird.

Wachse umfassen im Sinne der vorliegenden Erfindung Polyethylenwachse und/oder Paraffine (makrokristalline und mikrokristalline Paraffine) mit einem mittleren Molekulargewicht (Zahlenmittel) von 200 bis 1200.

Polyethylenwachse sind niedrigmolekulare Polymere die im wesentlichen aus Ethyleneinheiten aufgebaut und teil- oder hochkristallin sind. Die Polymerketten aus den Ethyleneinheiten sind langgestreckte Moleküle die verzweigt sein können, wobei kürzere Seitenketten überwiegen. Im allgemeinen werden Polyethylenwachse durch direkte Polymerisation des Ethylens, gegebenenfalls unter Einsatz von Reglern, oder durch Depolymerisation von Polyethylenen mit höheren Molmassen hergestellt. Erfindungsgemäß haben die Polyethylenwachse ein mittleres Molekulargewicht Mn (Zahlenmittel) von 200 bis 1200, vorzugsweise von 400 bis 600 und vorzugsweise eine Molekulargewichtsverteilung (Polydispersität) Mw/Mn von unter 2, vorzugsweise 1 bis 1,5. Der Schmelzpunkt liegt im allgemeinen im Bereich von 70 bis 150°C, vorzugsweise 80 bis 100°C.

Paraffine umfassen makrokristalline Paraffine (Paraffinwachse) und mikrokristalline Paraffine (Mikrowachse) mit einem mittleren Molekulargewicht (Zahlenmittel) von 200 bis 1200. Die makrokristallinen Paraffine werden aus den Vakuumdestillatfraktionen bei deren Verarbeitung auf Schmieröle gewonnen. Die mikrokristallinen Paraffine stammen aus den Rückständen der Vakuumdestillation und den Sedimenten paraffinischer Rohöle (Ausscheidungsparaffine). Die makrokristallinen Paraffine bestehen überwiegend aus n-Paraffinen, die zusätzlich je nach Raffinationsgrad iso-Paraffine, Naphtene und Alkylaromaten enthalten. Die mikrokristallinen Paraffine bestehen aus einem Gemisch von Kohlenwasserstoffe, die bei Raumtemperatur vorwiegend fest sind. Anders als bei den makrokristallinen Paraffinen sind die iso-Paraffine und naphtenische Paraffine vorherrschend. Die mikrokristallinen Paraffine zeichnen sich durch das Vorhandensein von kristallisationshemmenden, stark verzweigten iso-Paraffinen und Naphtenen aus. Für die Zwecke der Erfindung sind Paraffine mit einem Schmelzpunkt von 60 bis 100°C, vorzugsweise 60 bis 85°C besonders geeignet.

Es wurde gefunden, daß die Wachse die gewünschte barriereverbessemde Wirkung in der Zwischenschicht nur entfalten wenn das mittlere Molekulargewicht (Zahlenmittel) im Bereich von 200 bis 1200 liegt. Wachse mit einem höheren Molekulargewicht verbessern zwar die Reibung einer Folie zeigen aber keine Auswirkung auf die Barriere der Folie.

Zusätzlich zu dem erfindungswesentlichen Wachs kann die Zwischenschicht weitere übliche Additive wie z. B. die vorstehend für die Basisschicht beschriebenen Neutralisationsmittel, Stabilisatoren und Antistatika sowie übliche Gleitmittel in jeweils wirksamen Mengen enthalten.

Gleitmittel sind höhere aliphatische Säureamide, höhere aliphatische Säureester und Metallseifen sowie Silikonöle. Besonders geeignet ist der Zusatz von höheren aliphatischen Säureamiden und Silikonölen. Aliphatische Säureamide sind Amide einer wasserunlöslichen Monocarbonsäure mit 8 bis 24 Kohlenstoffatomen, vorzugsweise 10 bis 18 Kohlenstoffatomen. Erucasäureamid, Stearinsäureamid und Ölsäureamid sind bevorzugt. Geeignete Silikonöle sind Polydialkylsiloxane, vorzugsweise Polydimethylsiloxan, Polymethylphenylsiloxan, olefinmodifiziertes Silikon, mit Polyethem modifiziertes Silikon wie z. B. Polyethylenglykol und Polypropylenglykol sowie epoxyamino- und alkoholmodifiziertes Silikon. Die Viskosität der geeigneten Silikonöle liegt im Bereich von 5000 bis 1 000 000 $mm^2/s$. Polydimethylsiloxan mit einer Viskosität von 10.000 bis 100.000 $mm^2/s$ ist bevorzugt.

Für die opaken Ausführungsformen der Erfindung gemäß Anspruch 2 ist zu beachten, daß die Zwischenschicht keine vakuoleniniziierenden Füllstoffe enthalten sollte, damit beim Verstrecken der Folie in der Zwischenschicht keine Vakuolen erzeugt werden. Es wurde gefunden, daß die Vorteile der Erfindung bei einer vakuolenhattigen Zwischenschicht beeinträchtigt werden, d. h. daß die Wachse in der vakuolenhaltigen Zwischenschicht ihre Wirkung nicht in der vorhergesehenen Weise und nicht in dem gewünschten Maße entfalten. Insbesondere ist die erhöhte Barriere gegenüber Wasserdampf nicht mehr gewährleistet. Es ist daher für opake Ausführungsformen der Erfindung wesentlich, daß die Zwischenschicht keine Vakuolen aufweist.

Gegebenenfalls kann die opake Ausführungsform der Folie jedoch in der Zwischenschicht zusätzlich Pigmente, welche im wesentlichen keine Vakuolen erzeugen, enthalten.

Als Pigmente werden diejenigen Teilchen eingesetzt, welche vorstehend als Pigmente für die Basisschicht beschrieben sind, wobei $TiO_2$ als Pigment für die Zwischenschicht besonders bevorzugt ist. Die Zwischenschicht enthält im allgemeinen 1 bis 20 Gew.-%, vorzugsweise 2 bis 10 Gew.-%, Pigmente, jeweils bezogen auf das Gewicht der Zwischenschicht.

Die erfindungsgemäße Polypropylenfolie umfaßt weiterhin beidseitig aufgebrachte Deckschichten aus Polymeren aus Olefinen mit 2 bis 10 Kohlenstoffatomen.

Beispiele für derartige olefinische Polymere sind

ein Propylenhomopolymer oder
ein Copolymer von

Ethylen und Propylen oder
Ethylen und Butylen-1 oder
Propylen und Butylen-1 oder

ein Terpolymer von

Ethylen und Propylen und Butylen-1 oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%.

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Die in der Deckschicht von siegelfähigen Ausführungsformen der Folie eingesetzten vorstehend beschriebenen Co- oder Terpolymeren weisen im allgemeinen einen Schmelzflußindex von 1,5 bis 30 g/10min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können alle vorstehend beschriebenen Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 1,5 bis 15, vorzugsweise 1,5 bis 10.

In einer matten Ausführungsform enthält die Deckschicht zusätzlich ein High Density Polyethylen (HDPE), welches mit den vorstehend beschriebenen Deckschichtpolymeren gemischt oder geblendet wird. Die Zusammensetzung und Einzelheiten der matten Deckschichten sind beispielsweise in der deutschen Patentanmeldung P 43 13 430.0 beschrieben, auf die hier ausdrücklich Bezug genommen wird.

Die Deckschichten können wie vorstehend für Basis- und Zwischenschicht beschrieben Stabilisatoren, Neutralisationsmittel, Gleitmittel, Antiblockmittel und/oder Antistatika in den entsprechenden Mengen enthalten. In einer bevorzugten Ausführungsform enthalten die Deckschichten nachstehend beschriebene Antiblockmittel.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel, vorzugsweise $SiO_2$, liegt im Bereich von 0,1 bis 2 Gew.-%, vorzugsweise 0,1 bis 0,8 Gew.-% jeweils bezogen auf das Gewicht der Deckschicht. Die mittlere Teilchengröße liegt zwischen 1 und 6 µm, insbesondere 2 und 5 µm. wobei Teilchen mit einer kugelförmigen Gestalt, wie in der EP-A-0 236 945 und der DE-A-38 01 535 beschrieben, besonders geeignet sind.

Die Dicke der Deckschicht/an ist im allgemeinen größer als 0,2 µm und liegt vorzugsweise im Bereich von 0,4 bis 2 µm, insbesondere 0,5 bis 1,5 µm.

Die Gesamtdicke der erfindungsgemäßen Polypropylenfolie kann innerhalb weiter Grenzen variieren und richtet sich nach dem beabsichtigten Einsatz. Sie beträgt für transparente Ausführungsformen 4 bis 80µm, vorzugsweise 5 bis 50µm, insbesondere 10 bis 30µm. Opake/weiße Ausführungsformen sind im allgemeinen 10 bis 150 µm, vorzugsweise 15 bis 100 µm, insbesondere 20 bis 80 µm dick, wobei die Basisschicht etwa 40 bis 95 % der Gesamtfoliendicke ausmacht.

Die Erfindung betrifft weiterhin ein Verfahren zur Herstellung der erfindungsgemäßen Polypropylenfolie nach dem an sich bekannten Coextrusionsverfahren.

Im Rahmen dieses Verfahrens wird zunächst wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstreckverhältnisse liegen im Bereich von 5,0 bis 9, vorzugsweise 5,5 bis 8,5. Die Querstreckverhältnisse liegen im Bereich von 5,0 bis 9,0, vorzugsweise 6,5 bis 9,0.

An die biaxiale Streckung der Folie schließt sich ihre Thermofixierung (Wärmebehandlung) an, wobei die Folie etwa 0,1 bis 20 s lang bei einer Temperatur von 60 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 10 bis 100 °C, vorzugsweise 20 bis 70 °C, zu halten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung bei 80 bis 150 °C und die Querstreckung vorzugsweise bei 120 bis 170 °C durchgeführt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von 36 bis 50 mN/m, vorzugsweise 38 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Mehrschichtfolie zeichnet sich durch ihre gute Barriere gegenüber Wasserdampf aus. Es wurde gefunden, daß die Einarbeitung von Wachs in der Zwischenschicht vorteilhaft gegenüber einer Rezepturierung der Basisschicht mit Wachs als auch vorteilhaft gegenüber einer synergistischen Kombination von Harz und Wachs in der Basisschicht ist. Zum einen kann mit einer vergleichsweise geringen Absolutmenge an Wachs eine hervorragende Barriereverbesserung erzielt werden. Zum anderen ist die Folie außerordentlich kostengünstig herzustellen. Die Barrierewerte können besonders flexibel über die Konzentration und die Dicke der Zwischenschicht eingestellt werden. Dies ermöglicht eine besonders hohe Flexibilität gegenüber Kundenwünschen.

Überraschenderweise genügt die ausschließliche Rezepturierung der Zwischenschichten mit Wachs, um eine gute Barriere zu erzielen. Es wurde gefunden, daß zusätzliche Mengen an Harz in der Zwischenschicht keine weitere Verbesserung der Barriere bewirken. Dies ist um so überraschender als gleichzeitig mit den Untersuchungen zu dieser Anmeldung festgestellt wurde, daß die Kombination von Wachs und Harz in der Basisschicht synergistisch zusammenwirkt. Diese Ergebnisse legen die Vermutung nahe, daß die Wirkungsmechanismen des Wachses in der Zwischenschicht andere sind als in der Basisschicht einer orientierten Folie, wenn gleich auch heute noch nicht wirklich verstanden ist worauf die barriereverbessemde Wirkung des Wachses beruht.

Überraschenderweise müssen weder der Basisschicht noch der Deckschicht zusätzlich die Additive wie Kohlenwasserstoffharze oder Wachse zugesetzt werden, um die gewünschten Barriereeigenschaften sicherzustellen.

Des weiteren wurde festgestellt, daß andere wünschenswerte Gebrauchseigenschaften der Folie durch das Wachs in der Zwischenschicht nicht beeinträchtigt werden. Die Folie zeichnet sich neben der verbesserten Barriere auch durch eine gute Transparenz, einen hohen Glanz und durch gute Siegeleigenschaften aus.

Von großer Bedeutung ist die Erfindung bei vakuolenhaltigen Folien. Bei diesem Folientyp können die relativ geringen Wachsmengen gemäß der Erfindung trotz der vakuolenhaltigen Basisschicht eine überraschend gute Barrierewirkung entfalten. Herkömmliche vakuolenhaltige Folien, deren Basisschicht mit Wachs versetzt wurde, benötigen gegenüber transparenten Folien erheblich größere Wachsmenge. Vermutlich erzeugen die Vakuolen eine innere Oberfläche, zu der das Wachs migriert.

Die Erfindung wird durch die nachfolgenden Beispiele näher erläutert.

**Beispiel 1**

Es wurde durch Coextrusion der jeweiligen Rohstoffmischungen und anschließende stufenweise Orientierung in Längs- und Querrichtung eine transparente fünfschichtige Folie mit symmetrischem Aufbau DZBZD mit einer Gesamtdicke von 20 μm hergestellt. Die Deckschichten D hatten eine Dicke von jeweils 0,6 μm. die Zwischenschichten Z hatten jeweils eine Dicke von 1,5μm. Der rechnerische Gehalt an Wachs bezogen auf das Gesamtgewicht der Folie betrug 1 Gew.-%. Der Wachsgehalt bezogen auf das Gesamtgewicht der Folie wird berechnet aus dem Wachsgehalt in der Rohstoffmischung der Zwischenschicht und der Dicke der Zwischenschicht und der Gesamtdicke der Folie.

| Rohstoffmischung der Basisschicht B: | |
|---|---|
| 99,85 Gew.-% | hochisotaktisches Propylenhomopolymer mit einem Schmelzpunkt von 166 °C und einem Schmelzflußindex von 3,4 g/10min, wobei der n-heptanunlösliche Anteil einen Kettenisotaxie-Index von 98 % hatte |
| 0,15 Gew.-% | N,N-bis-ethoxyalkylamin (Antistatikum) |

| Rohstoffmischung der Zwischenschichten Z: | |
|---|---|
| 93,0 Gew.-% | isotaktisches Polypropylen der Firma Solvay mit dem Markennamen ®PHP 405 |
| 7,0 Gew.-% | Polyethylenwachs mit einem mittleren Molekulargewicht Mn von 500 und Molekulargewichtsverteilung Mw/Mn von 1,08 |

| Rohstoffmischung der Deckschichten D: | |
|---|---|
| ca. 74 Gew.-% | statistisches Ethylen-Propylen-Copolymeres mit einem $C_2$-Gehalt von 4,5 Gew.-% |
| ca. 25 Gew.-% | statistisches Ethylen-Propylen-Butylen-Terpolymer mit einem Ethylengehalt von 3 Gew.-% und einem Butylengehalt von 7 Gew.-% (Rest Propylen) |
| 0,33 Gew.-% | $SiO_2$ als Antiblockmittel mit einer mittleren Teilchengröße von 2 µm |
| 1,20 Gew.-% | Polydimethylsiloxan mit einer Viskosität von 30 000 $mm^2/s$ |

Die Herstellungsbedingungen in den einzelnen Verfahrensschritten waren:

| | | | |
|---|---|---|---|
| Extrusion | Temperaturen | Basisschicht | 260 °C |
| | | Deckschichten | 240°C |
| | | Zwischenschicht | 260°C |
| | Temperatur der Abzugswalze | | 20 °C |
| Längsstreckung | Temperatur | | 110 °C |
| | Längsstreckverhättnis | | 5,5 |
| Querstreckung | Temperatur | | 160 °C |
| | Querstreckverhältnis | | 9 |
| Fixierung | Temperatur | | 140 °C |
| | Konvergenz | | 20 % |

Bei dem Querstreckverhältnis $I_Q$ = 9 handelt es sich um einen Effektivwert. Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.

**Beispiel 2**

Es wurde eine Folie wie in Beispiel 1 beschrieben hergestellt. Die Rohstoffmischung der Zwischenschicht enthielt jetzt 10 Gew.-% des gleichen Wachses, entsprechend einem rechnerischen Gesamtgehalt, bezogen auf das Gesamtgewicht der Folie von ca. 1,5 Gew.-%. Die übrige Zusammensetzung und die Herstellbedingungen wurden gegenüber Beispiel 1 nicht geändert.

**Beispiel 3**

Es wurde eine Folie wie in Beispiel 1 beschrieben hergestellt. Die Rohstoffmischung der Zwischenschicht enthielt jetzt 13,3 Gew.-% des gleichen Wachses, entsprechend einem rechnerischen Gesamtgehalt, bezogen auf das Gesamtgewicht der Folie von ca. 2 Gew.-%. Die übrige Zusammensetzung und die Herstellbedingungen wurden gegenüber Beispiel 1 nicht geändert.

**Beispiel 4**

Es wurde eine Folie wie in Beispiel 1 beschrieben hergestellt. Die Rohstoffmischung der Zwischenschicht enthielt jetzt 13,3 Gew.-% des gleichen Wachses. Die Dicke der Zwischenschicht betrug jetzt jeweils 3µm. Entsprechend betrug der rechnerische Gesamtgehalt an Wachs, bezogen auf das Gesamtgewicht der Folie ca. 4 Gew.-%. Die übrige Zusammensetzung und die Herstellbedingungen wurden gegenüber Beispiel 1 nicht geändert.

**Beispiel 5**

Es wurde eine Folie wie in Beispiel 1 beschrieben hergestellt. Die Rohstoffmischung der Zwischenschicht enthielt jetzt 20 Gew.-% des gleichen Wachses, entsprechend einem rechnerischen Gesamtgehalt, bezogen auf das Gesamtgewicht der Folie von ca. 3,0 Gew.-%. Die übrige Zusammensetzung und die Herstellbedingungen wurden gegenüber Beispiel 1 nicht geändert.

**Beispiel 6**

Es wurde eine Folie wie in Beispiel 4 beschrieben hergestellt. Die Rohstoffmischung der Zwischenschicht enthielt jetzt 20 Gew.-% des gleichen Wachses, entsprechend einem rechnerischen Gesamtgehalt, bezogen auf das Gesamtgewicht der Folie von ca. 6,0 Gew.-%. Die übrige Zusammensetzung und die Herstellbedingungen wurden gegenüber Beispiel 4 nicht geändert.

**Beispiel 7**

Es wurde eine Folie wie in Beispiel 1 beschrieben hergestellt. Die Rohstoffmischung der Zwischenschicht enthielt jetzt 27 Gew.-% des gleichen Wachses, entsprechend einem rechnerischen Gesamtgehalt, bezogen auf das Gesamtgewicht der Folie von ca. 4,0 Gew.-%. Die übrige Zusammensetzung und die Herstellbedingungen wurden gegenüber Beispiel 1 nicht geändert.

**Beispiel 8**

Es wurde eine Folie wie in Beispiel 1 beschrieben hergestellt. Die Rohstoffmischung der Basisschicht enthielt jetzt zusätzlich 10 Gew.-% eines Kohlenwasserstoffharzes. Die übrige Zusammensetzung und die Herstellbedingungen wurden gegenüber Beispiel 1 nicht geändert.

**Beispiel 9**

Es wurde eine Folie wie in Beispiel 1 beschrieben hergestellt Die Rohstoffmischung der Basisschicht enthielt jetzt zusätzlich 5 Gew.-% eines Kohlenwasserstoffharzes. Die übrige Zusammensetzung und die Herstellbedingungen wurden gegenüber Beispiel 1 nicht geändert.

**Vergleichsbeispiel 1**

Es wurde eine Folie wie in Beispiel 1 beschrieben hergestellt. Im Unterschied zu Beispiel 1 enthielt die Folie jetzt keine Zwischenschicht und weder in der Basisnoch in der Deckschicht ein Polyethylenwachs. Die übrige Zusammensetzung und die Herstellbedingungen wurden gegenüber Beispiel 1 nicht geändert.

**Vergleichsbeispiel 2**

Es wurde eine Folie wie in Vergleichsbeispiel 1 beschrieben hergestellt. Die Rohstoffmischung der Basisschicht enthielt jetzt Kohlenwasserstoffharz entsprechend einem rechnerischen Gesamtgehalt, bezogen auf das Gesamtgewicht der Folie von 5,0 Gew.-%. Die übrige Zusammensetzung und die Herstellbedingungen wurden gegenüber Vergleichsbeispiel 1 nicht geändert.

**Vergleichsbeispiel 3**

Es wurde eine Folie wie in Vergleichsbeispiel 1 beschrieben hergestellt. Die Rohstoffmischung der Basisschicht enthielt jetzt Kohlenwasserstoffharz entsprechend einem rechnerischen Gesamtgehalt, bezogen auf das Gesamtgewicht der Folie von 8,0 Gew.-%. Die übrige Zusammensetzung und die Herstellbedingungen wurden gegenüber Vergleichsbeispiel 1 nicht geändert.

**Vergleichsbeispiel 4**

Es wurde eine Folie wie in Vergleichsbeispiel 1 beschrieben hergestellt. Die Rohstoffmischung der Basisschicht enthielt jetzt Kohlenwasserstoffharz entsprechend einem rechnerischen Gesamtgehalt, bezogen auf das Gesamtgewicht der Folie von 10,0 Gew.-%. Die übrige Zusammensetzung und die Herstellbedingungen wurden gegenüber Vergleichsbeispiel 1 nicht geändert.

**Vergleichsbeispiel 5**

Es wurde eine Folie wie in Vergleichsbeispiel 1 beschrieben hergestellt. Die Rohstoffmischung der Basisschicht enthielt jetzt das gleiche Polyethylenwachs wie in Beispiel 1 beschrieben entsprechend einem rechnerischen Gesamtgehalt an Wachs, bezogen auf das Gesamtgewicht der Folie von 1,0 Gew.-%. Die Folie enthielt kein Kohlenwasserstoffharz. Die übrige Zusammensetzung und die Herstellbedingungen wurden gegenüber Vergleichsbeispiel 1 nicht geändert.

**Vergleichsbeispiel 6**

Es wurde eine Folie wie in Vergleichsbeispiel 5 beschrieben hergestellt. Die Rohstoffmischung der Basisschicht enthielt jetzt das gleiche Polyethylenwachs entsprechend einem rechnerischen Gesamtgehalt, bezogen auf das Gesamtgewicht der Folie von 2,0 Gew.-%. Die übrige Zusammensetzung und die Herstellbedingungen wurden gegenüber Vergleichsbeispiel 5 nicht geändert.

**Vergleichsbeispiel 7**

Es wurde eine Folie wie in Vergleichsbeispiel 5 beschrieben hergestellt. Die Rohstoffmischung der Basisschicht enthielt jetzt das gleiche Polyethylenwachs entsprechend einem rechnerischen Gesamtgehalt, bezogen auf das Gesamtgewicht der Folie von 3,0 Gew.-%. Die übrige Zusammensetzung und die Herstellbedingungen wurden gegenüber Vergleichsbeispiel 5 nicht geändert.

**Vergleichsbeispiel 8**

Es wurde eine Folie wie in Vergleichsbeispiel 5 beschrieben hergestellt. Die Rohstoffmischung der Basisschicht enthielt jetzt das gleiche Polyethylenwachs entsprechend einem rechnerischen Gesamtgehalt, bezogen auf das Gesamtgewicht der Folie von 4,0 Gew.-%. Die übrige Zusammensetzung und die Herstellbedingungen wurden gegenüber Vergleichsbeispiel 5 nicht geändert.

Zur Charakterisierung der Rohstoffe und der Folien wurden die folgenden Meßmethoden benutzt:

<u>Schmelzflußindex</u>

Der Schmelzflußindex wurde nach DIN 53 735 bei 21,6 N Belastung und 230 °C gemessen.

<u>Schmelzpunkt</u>

DSC-Messung, Maximum der Schmelzkurve, Aufheizgeschwindigkeit 20 °C/min.

<u>Wasserdampf- und Sauerstoffdurchlässigkeit</u>

Die Wasserdampfdurchlässigkeit wird gemäß DIN 53 122 Teil 2 bestimmt.

<u>Oberflächenspannung</u>

Die Oberflächenspannung wurde mittels der sogenannten Tintenmethode (DIN 53 364) bestimmt.

<u>Molekulargewichtsbestimmung</u>

Die mittleren Molmassen Mw und Mn und die mittlere Molmassen-Dispersität Mw/Mn wurden in Anlehnung an DIN 55672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (»135 °C) durchgeführt.

<u>Isotaktischer Anteil</u>

Der isotaktische Anteil des Homopolymeren kann in Näherung durch die unlösliche Fraktion des Rohstoffes in n-Heptan charakterisiert werden. Üblicherweise führt man eine Soxlet-Extraktion mit siedendem n-Heptan durch, wobei es zweckmäbig ist das Soxlet anstelle von Granulat mit einem Prebling zu befüllen. Die Dicke des Preblings sollte hierbei 500 Mikrometer nicht übersteigen. Für die quantitative Erfassung des n-heptan unlöslichen Anteils des Homopolymeren ist es von entscheidender Bedeutung, eine ausreichende Extraktionszeit von 8 bis 24 Stunden sicherzustellen.

Die operationelle Definition des isotaktischen Anteils $PP_{iso}$ in Prozent ist gegeben durch das Verhältnis der Gewichte der getrockneten n-heptanunlöslichen Fraktion zur Einwaage:

$$PP_{iso} = 100x \text{ (n-heptanunlösliche Fraktion/Einwaage)}$$

Eine Analyse des getrockneten n-Heptan-Extraktes zeigt, dab dieser in der Regel nicht aus reinem ataktischen Propylenhomopolymeren besteht. Bei der Extraktion werden auch aliphatische und olefinische Oligomere, insbesondere isotaktische Oligomere sowie auch mögliche Zusatzstoffe wie z. B. hydrierte Kohlenwasserstoffharze und Wachs, miterfabt.

Kettenisotaxie-Index

Der oben definierte isotaktische Anteil $PP_{iso}$ bestimmt als n-heptan unlöslicher Anteil ist für die Charakterisierung der Kettenisotaxie des Homopolymeren nicht ausreichend. Es erweist sich als sinnvoll, den Kettenisotaxie-Index II des Homopolymeren mittels hochauflösender $^{13}C$-NMR-Spektroskopie zu bestimmen, wobei als NMR-Probe nicht der Originalrohstoff, sondern dessen n-heptanunlösliche Fraktion zu wählen ist. Zur Charakterisierung der Isotaxie von Polymerketten benutzt man in der Praxis meist den $^{13}C$-NMR-spektroskopischen Triaden-Isotaxie-Index II (Triaden).

Bestimmung des triadenbezogenen Kettenisotaxie-Index II (Triaden)

Die Bestimmung des Kettenisotaxie-Index II (Triaden) des n-heptanunlöslichen Anteils des Homopolymeren sowie der Folie wird aus dessen bzw. deren $^{13}C$-NMR-Spektrum bestimmt. Man vergleicht die Intensitäten von Triaden-Signafen, welche aus den Methylgruppen mit unterschiedlichen lokalen Umgebungen resultieren.
Hinsichtlich der Auswertung des $^{13}C$-NMR-Spektrums sind zwei Fälle zu unterscheiden:

A) Der untersuchte Rohstoff ist ein Propylenhomopolymer ohne statistischen $C_2$-Gehalt.

B) Der untersuchte Rohstoff ist ein Propylenhomopolymer mit einem geringen statistischen $C_2$-Gehalt, im folgenden $C_2$-$C_3$-Copolymer genannt.

**Fall A:**

Der Kettenisotaxie-Index des Homopolymeren wird aus dessen $^{13}C$-NMR-Spektrum bestimmt. Man vergleicht die Intensitäten von Signalen, welche aus den Methylgruppen mit unterschiedlicher Umgebung resultieren. Im $^{13}C$-NMR-Spektrum eines Homopolymeren treten im wesentlichen drei Gruppen von Signalen, sogenannte Triaden, auf.

1. Bei einer chemischen Verschiebung von etwa 21 bis 22 ppm tritt die "mm-Triade" auf, welche den Methylgruppen mit links und rechts unmittelbar benachbarten Methylgruppen zugeordnet wird.

2. Bei einer chemischen Verschiebung von etwa 20,2 bis 21 ppm tritt die "mr-Triade" auf, welche den Methylgruppen mit links oder rechts unmittelbar benachbarten Methylgruppen zugeordnet wird.

3. Bei einer chemischen Verschiebung von etwa 19,3 bis 20 ppm tritt die "rr-Triade" auf, welche den Methylgruppen ohne unmittelbar benachbarte Methylgruppen zugeordnet wird.

Die Intensitäten der zugeordneten Signalgruppen werden als Integral der Signale bestimmt. Der Kettenisotaxie-Index ist wie folgt definiert:

$$II\ Triaden = \frac{J_{mm} + 0,5\ J_{mr}}{J_{mm} + J_{mr} + J_{rr}} \cdot 100$$

worin $J_{mm}$, $J_{mr}$ und $J_{rr}$ die Integrale der zugeordneten Signalgruppen bedeuten.

**Fall B:**

Im $^{13}C$-NMR Spektrums eines Ethylen-Propylen-Copolmeren liegt die chemische Verschiebung der interessierenden Methylgruppen im Bereich 19 bis 22 ppm. Das Spektrum der Methylgruppen kann in drei Blöcke unterteilt

werden. In diesen Blöcken erscheinen die $CH_3$-Gruppen in triadischen Sequenzen, deren Zuordnung zu den lokalen Umgebungen im folgenden näher erläutert wird:

**Block 1:**

$CH_3$-Gruppen in der PPP-Sequenz (mm-Triade)

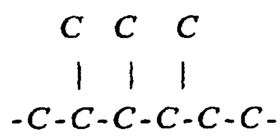

**Block 2:**

$CH_3$-Gruppen in der PPP-Sequenz (mr oder rm-Triaden)

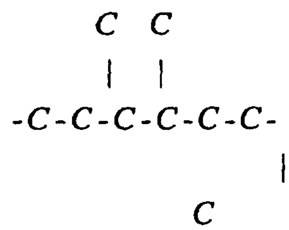

und $CH_3$-Gruppen in der EPP-Sequenz (m-Kette):

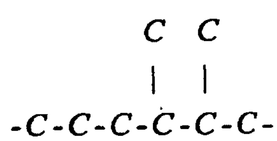

**Block 3**

$CH_3$-Gruppen in der PPP-Sequenz (rr-Triaden):

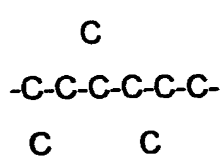

$CH_3$-Gruppen in einer EPP-Sequenz (r-Kette):

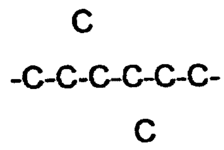

$CH_3$-Gruppen in einer EPE-Sequenz:

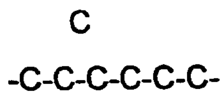

Bei der Bestimmung des triadenbezogenen Kettenisotaxie-Index II (Triaden) des n-heptanunlöslichen Anteils eines Ethylen-Propylen-Copolymers werden nur PPPTriaden in Betracht gezogen, d. h. nur solche Propylen-Einheiten, die zwischen zwei benachbarten Propylen-Einheiten liegen (siehe auch EP-B-0 115 940, Seite 3, Zeilen 48 und 49).
Die Definition des Triaden-Isotaxie-Index eines Ethylen-Propylen-Copolymeren lautet:

$$\text{II (Triaden)} = 100x(J_{mm}/J_{ppp})$$

Berechnung des Kettenisotaxie-Index eines Ethylen-Propylen-Copolymers:

1. $J_{mm}$ ist gegeben durch das Peakintegral von Block 1.

2. Berechne das Integral ($J_{gesamt}$) aller Methylgruppenpeaks in den Blöcken 1, 2 und 3.

3. Durch einfache Betrachtungen läbt sich zeigen, dab $J_{ppp}=J_{gesamt}-J_{EPP}-J_{EPE}$.

Probenvorbereitung und Messung:

60 bis 100 mg Polypropylen werden in 10 mm-NMR-Röhrchen eingewogen und Hexachlorbutadien und Tetrachlorethan in einem Mischungsverhältnis von etwa 1.5:1 zugegeben, bis eine Füllhöhe von ca. 45 mm erreicht ist. Die Suspension wird so lange (in der Regel ca. eine Stunde) bei ca. 140 °C aufbewahrt, bis eine homogene Lösung entstanden ist. Um den Lösevorgang zu beschleunigen, wird die Probe von Zeit zu Zeit mit einem Glasstab gerührt.
Die Aufnahme des $^{13}C$-NMR-Spektrums erfolgt bei erhöhter Temperatur (in der Regel 365 K) unter Standardmeßbedingungen (halbquantitativ).

**Referenzen:**

W.O. Crain, Jr., A. Zambelli, and J.D. Roberts, Macromolecules, 4,330 (1971) A. Zambelli, G. Gatti, C. Sacchi, W.O. Crain, Jr., and J.D. Roberts, Macromolecules, 4,475 (1971)
C.J. Carman and C.E. Wilkes, Rubber Chem. Technol. 44,781 (1971)

**TABELLE 1**

| Beispiele | jeweilige Zwischen schichtdicke in µm | Wachsgehalt in der Rohstoffmischung der Zwischenschicht in Gew.-% | rechnerischer Harzgehalt in Gew.-% bezogen auf das Gesamtgewicht der Folie (Harz in der Basisschicht) | rechnerischer Wachsgehalt in Gew.-% bezogen auf das Gesamtgewicht der Folie (Wachs in der Zwischenschicht) | Permeationskoeffizient nach DIN 53122 bei 38°C und 90% relativer Feuchte g 20µm/100in² 24h |
|---|---|---|---|---|---|
| B1 | 1,5 | 7,0 | 0 | 1,0 | 0,32 |
| B2 | 1,5 | 10,0 | 0 | 1,5 | 0,20 |
| B3 | 1,5 | 13,3 | 0 | 2,0 | 0,18 |
| B4 | 3,0 | 13,3 | 0 | 4,0 | 0,14 |
| B5 | 1,5 | 20,0 | 0 | 3,0 | 0,16 |
| B6 | 3,0 | 20,0 | 0 | 6,0 | 0,12 |
| B7 | 1,5 | 27,0 | 0 | 4,0 | 0,13 |
| B8 | 1,5 | 7,0 | 10 | 1,0 | 0,20 |
| B9 | 1,5 | 7,0 | 5 | 1,0 | 0,24 |

## TABELLE 2

| Vergleichs-beispiele | jeweilige Zwischen schichtdicke in µm | rechnerischer Harzgehalt in Gew.-% bezogen auf das Gesamtgewicht der Folie (Harz in der Basisschicht) | rechnerischer Wachsgehalt in Gew.-% bezogen auf das Gesamtgewicht der Folie (Wachs in der Zwischenschicht) | Permeationskoeffizient nach DIN 53122 bei 38°C und 90% relativer Feuchte g 20µm/100in² 24h |
|---|---|---|---|---|
| VB1 | 0 | 0 | 0 | 0,37 |
| VB2 | 0 | 5 | 0 | 0,29 |
| VB3 | 0 | 8 | 0 | 0,27 |
| VB4 | 0 | 10 | 0 | 0,25 |
| VB5 | 0 | 0 | 1 | 0,37 |
| VB6 | 0 | 0 | 2 | 0,35 |
| VB7 | 0 | 0 | 3 | 0,30 |
| VB8 | 0 | 0 | 4 | 0,20 |

## Patentansprüche

1. Mehrschichtige biaxial orientierte transparente Polypropylenfolie mit einer Gesamtdicke von 4 bis 80 µm aus einer Basisschicht B aus enthaltend 70-100 Gew.-% eines Polypropylenpolymers und zwei siegelfähigen Deckschicht D aus Polymeren aus Olefinen mit 2 bis 10 C-Atomen und beidseitigen Zwischenschichten die aus isotaktischem Propylenhomopolymer mit einem n-heptanlöslichen Anteil von 6 Gew.-% und weniger oder olefinischen Co- oder Terpolymeren aus Olefin ausgewählt aus der Gruppe von Ethylen, Propylen und Butylen-1 aufgebaut sind, gemäß einem Schichtaufbau DZBZD, **dadurch gekennzeichnet, daß** beide Zwischenschichten Wachs mit einem mittleren Molekulargewicht Mn von 200 bis 1200 enthalten,

2. Mehrschichtige opake biaxial orientierte Polypropylenfolie aus einer Basisschicht B enthaltend 70-100 Gew.-% eines Polypropylenpolymers und zwei siegelfähigen Deckschicht D aus Polymeren aus Olefinen mit 2 bis 10 C-Atomen und beidseitigen Zwischenschichten Z, die aus isotaktischem Propylenhomopolymer mit einem n-heptanlöslichen Anteil von 6 Gew.-% und weniger oder olefinischen Co- oder Terpolymeren aus Olefinen ausgewählt aus der Gruppe von Ethylen, Propylen, Butylen-1 aufgebaut sind, gemäß einem Schichtaufbau DZBZD, **dadurch gekennzeichnet, daß** beide Zwischenschichten Wachs mit einem mittleren Molekulargewicht Mn von 200 bis 1200 enthalten und die Zwischenschichten keine Vakuolen aufweisen.

3. Polypropylenfolie gemäß Anspruch 1, **dadurch gekennzeichnet, daß** die Zwischenschicht Wachs in einer Menge von 3 bis 40 Gew.-%, vorzugsweise 5 bis 30 Gew.-%, bezogen auf das Gewicht der Zwischenschicht, enthält.

4. Polypropylenfolie gemäß Anspruch 1 und/oder 2 **dadurch gekennzeichnet, daß** das Wachs ein Polyethylenwachs mit Mw/Mn von 1 bis 2 ist.

5. Polypropylenfolie gemäß einem oder mehreren der Ansprüche 1 bis 3, **dadurch gekennzeichnet, daß** das Wachs ein makrokristallines Paraffin (Paraffinwachs) oder ein mikrokristallines Paraffin (Mikrowachs) ist.

6. Polypropylenfolie gemäß einem oder mehreren der Ansprüche 1 bis 4, **dadurch gekennzeichnet, daß** die Zwischenschicht 0,2 bis 10 µm, vorzugsweise 0,4 bis 5 µm, dick ist.

7. Polypropylenfolie gemäß einem oder mehreren der Ansprüche 1 bis 5, **dadurch gekennzeichnet, daß** die Zwischenschicht ein hochisotaktisches Propylenhomopolymer mit einem mittels $^{13}C$-NMR-Spektroskopie bestimmten Kettenisotaxie-Index des n-heptanunlöslichen Anteils von mindestens 95 %, vorzugsweise 96 bis 99 % enthält.

8. Polypropylenfolie gemäß einem oder mehreren der Ansprüche 1 bis 7, **dadurch gekennzeichnet, daß** sie eine matte Deckschicht aufweist.

9. Polypropylenfolie gemäß einem oder mehreren der Ansprüche 1 bis 8, **dadurch gekennzeichnet, daß** die Basisschicht ein hochisotaktisches Propylenhomopolymer mit einem mittels $^{13}C$-NMR-Spektroskopie bestimmten Kettenisotaxie-Index des n-heptanunlöslichen Anteils von mindestens 95 %, vorzugsweise 96 bis 99 % enthält.

10. Polypropylenfolie gemäß einem oder mehreren der Ansprüche 1 bis 9, **dadurch gekennzeichnet, daß** die Basisschicht Kohlenwasserstoffharz in einer Menge von 1 bis 20 Gew.-% , bezogen auf das Gewicht der Basisschicht enthält.

11. Polypropylenfolie gemäß einem oder mehreren der Ansprüche 1 bis 10, **dadurch gekennzeichnet, daß** die Basisschicht Antistatikum, vorzugsweise tertiäres aliphatisches Amin, enthält.

12. Polypropylenfolie gemäß einem oder mehreren der Ansprüche 2 bis 12, **dadurch gekennzeichnet, daß** die Folie transparent und 4 bis 80 µm dick ist.

13. Polypropylenfolie gemäß einem oder mehreren der Ansprüche 2 bis 11, **dadurch gekennzeichnet, daß** die Folie opak und /oder weiß ist und eine Lichtdurchlässigkeit von höchstens 70% aufweist.

14. Polypropylenfolie gemäß einem oder mehreren der Ansprüche 1 bis 13, **dadurch gekennzeichnet, daß** die Deckschicht/en Gleitmittel, vorzugsweise Polydimethylsiloxan, und Antiblockmittel, vorzugsweise $SiO_2$, enthält/enthalten.

15. Polypropylenfolie gemäß einem oder mehreren der Ansprüche 1 bis 14, **dadurch gekennzeichnet, daß** alle Schichten der Folie Neutralisationsmittel und Stabilisator enthalten.

16. Verfahren zur Herstellung einer Polypropylenfolie gemäß Anspruch 1 oder 2, **dadurch gekennzeichnet, daß** die Orientierung in Längsrichtung mit einem Längsstreckverhältnis von 5:1 bis 9:1 und in Querrichtung mit einem Querstreckverhältnis von 5:1 bis 10:1 erfolgt.

17. Verwendung der Polypropylenfolie gemäß einem oder mehreren Ansprüchen 1 bis 15 als Verpackungsfolie, vorzugsweise Zigaretteneinschlagsfolie.

**Revendications**

1. Film polypropylène biorienté multicouches transparent d'une épaisseur totale comprise entre 4 et 80 µm constitué d'une couche de base B renfermant, en masse, de 70 à 100 % d'un polymère polypropylène et de deux couches extérieur D scellables en polymère à base d'oléfines ayant entre 2 et 10 atomes de carbone et, de part et d'autre, de couches intermédiaires Z formées à partir d'un propylène homopolymère isotactique ayant une fraction soluble dans le n-heptane de 6 pourcent en poids au plus ou à partir de copolymères ou terpolymères oléfiniques à base d'oléfines choisies parmi l'éthylène, le propylène, le butylène-1 selon une constitution DZBZD, **caractérisé en ce que** les deux couches intermédiaires contiennent de la cire d'une masse moléculaire moyenne en nombre Mn comprise entre 200 et 1200.

2. Film polypropylène biorienté multicouches opaque constitué d'une couche de base B renfermant, en masse, de 70 à 100 % d'un polymère polypropylène et de deux couches extérieur D scellables en polymère à base d'oléfines ayant entre 2 et 10 atomes de carbone et de part et d'autre de couches intermédiaires Z formées à partir d'un propylène homopolymère isotactique ayant une fraction soluble dans le n-heptane de 6 pourcent en poids au plus ou à partir de copolymères ou terpolymères oléfiniques à base d'oléfines choisies parmi l'éthylène, le propylène, le butylène-1 selon une constitution DZBZD, **caractérisé en ce que** les deux couches intermédiaires contiennent de la cire d'une masse moléculaire moyenne en nombre Mn comprise entre 200 et 1200 et que les couches intermédiaires ne comportent pas de vacuoles.

3. Film polypropylène selon la revendication 1, **caractérisé en ce que** la couche intermédiaire renferme en masse de 3 à 40 %, de préférence de 5 à 30 % de cire, calculés par rapport à la masse de la couche intermédiaire.

4. Film polypropylène selon la revendication 1 et/ou 2, **caractérisé en ce que** la cire est une cire polyéthylène de masse moléculaire Mw/Mn de 1 à 2.

5. Film polypropylène selon une ou plusieurs des revendications 1 à 3, **caractérisé en ce que** la cire est une paraffine macrocristalline (cire de paraffine) ou une paraffine microcristalline (cire microcristalline).

6. Film polypropylène selon une ou plusieurs des revendications 1 à 4, **caractérisé en ce que** la couche intermédiaire a une épaisseur comprise entre 0,2 et 10 µm, de préférence entre 0,4 et 5 µm.

7. Film polypropylène selon une ou plusieurs des revendications 1 à 5, **caractérisé en ce que** la couche intermédiaire contient un propylène homopolymère hautement isotactique dont la fraction insoluble dans le n-heptane a un indice d'isotacticité déterminé au moyen d'une spectroscopie RMN $^{13}C$ de 95 % au moins, de préférence de 96 à 99 %.

8. Film polypropylène selon une ou plusieurs des revendications 1 à 7, **caractérisé en ce qu'**il comporte une couche extérieur matte.

9. Film polypropylène selon une ou plusieurs des revendications 1 à 8, **caractérisé en ce que** la couche de base contient un propylène homopolymère hautement isotactique dont la fraction insoluble dans le n-heptane a un indice d'isotacticité déterminé au moyen d'une spectroscopie RMN $^{13}C$ de 95 % au moins, de préférence de 96 à 99 %.

10. Film polypropylène selon une ou plusieurs des revendications 1 à 9, **caractérisé en ce que** la couche de base renferme en masse de 1 à 20 % de résine hydrocarbonée, calculés par rapport à la masse de la couche de base.

11. Film polypropylène selon une ou plusieurs des revendications 1 à 10, **caractérisé en ce que** la couche de base

contient un agent antistatique, de préférence une amine tertiaire aliphatique.

12. Film polypropylène selon une ou plusieurs des revendications 2 à 11, **caractérisé en ce que** le film est transparent et a une épaisseur comprise entre 4 et 80 µm.

13. Film polypropylène selon une ou plusieurs des revendications 2 à 11, **caractérisé en ce que** le film est opaque et/ou blanc et présente une transparence de 70 % au plus.

14. Film polypropylène selon une ou plusieurs des revendications 1 à 13, **caractérisé en ce que** la/les couche/s extérieurcontient/contiennent un agent de glissement, de préférence du polydiméthylsiloxane, et un agent antibloquant, de préférence du $SiO_2$.

15. Film polypropylène selon une ou plusieurs des revendications 1 à 14, **caractérisé en ce que** toutes les couches du film contiennent un agent neutralisant et un agent stabilisant.

16. Procédé de fabrication d'un film polypropylène selon la revendication 1 ou 2, **caractérisé en ce que**, dans le sens de la longueur, l'orientation est effectuée selon un rapport d'allongement longitudinal de 5:1 à 9:1 et, dans le sens transversal, selon un rapport d'allongement transversal de 5:1 à 10:1.

17. Utilisation du film de polypropylène selon une ou plusieurs des revendications 1 à 15 en tant que film d'emballage, de préférence pour l'emballage de cigarettes.

## Claims

1. A multi-layered biaxially oriented transparent polypropylene film having an overall thickness of from 4 to 80 µm and consisting of a base layer B containing 70 - 100 wt. % of a polypropylene polymer and of two sealable toplayers D made of polymers of olefins having 2 to 10 carbon atoms and of intermediate layers Z that are provided on either side and are built of isotactic propylene homopolymer having an n-heptane-soluble fraction of 6 wt. % and less or of olefinic co- or terpolymers of olefins selected from the group of ethylene, propylene and butylene-1, according to a pattern DZBZD, **characterized in that** the two intermediate layers contain wax having a mean molecular weight Mn ranging from 200 to 1,200.

2. A multi-layered opaque biaxially oriented polypropylene film consisting of a base layer B containing 70 - 100 wt. % of a polypropylene polymer and of two sealable toplayers D made of polymers of olefines having 2 to 10 carbon atoms and of intermediate layers Z that are provided on either side and are built of isotactic propylene homopolymer having an n-heptane-soluble fraction of 6 wt.% and less or of olefinic co- or terpolymers of olefines selected from the group of ethylene, propylene, butylene-1, according to a pattern DZBZD, **characterized in that** the two intermediate layers contain wax having a mean molecular weight Mn ranging from 200 to 1,200 and that the intermediate layers comprise no vacuoles.

3. The polypropylene film in accordance with claim 1, **characterized in that** the intermediate layer contains wax in an amount ranging from 3 to 40 wt.%, preferably from 5 to 30 wt.%, related to the weight of the intermediate layer.

4. The polypropylene film in accordance with claim 1 and/or 2, **characterized in that** the wax is a polyethylene wax having a Mw/Mn of from 1 to 2.

5. The polypropylene film in accordance with one or several of the claims 1 through 3, **characterized in that** the wax is a macrocrystalline paraffin (paraffin wax) or a microcrystalline paraffin (microwax).

6. The polypropylene film in accordance with one or several of the claims 1 through 4, **characterized in that** the intermediate layer has a thickness of from 0.2 to 10 µm, preferably of from 0.4 to 5 µm.

7. The polypropylene film in accordance with one or several of the claims 1 through 5, **characterized in that** the intermediate layer contains a highly isotactic propylene homopolymer, with the n-heptane-insoluble fraction having a chain isotaxy index determined by $^{13}C$ NMR spectroscopy of at least 95 %, and preferably of from 96 to 99 %.

8. The polypropylene film in accordance with one or several of the claims 1 through 7, **characterized in that** it

comprises a matte toplayer.

9. The polypropylene film in accordance with one or several of the claims 1 through 8, **characterized in that** the base layer contains a highly isotactic propylene homopolymer, with the n-heptane-insoluble fraction having a chain isotaxy index determined by $^{13}C$ NMR spectroscopy of at least 95 %, and preferably of from 96 to 99 %.

10. The polypropylene film in accordance with one or several of the claims 1 through 9, **characterized in that** the base layer contains from 1 to 20 wt. % of hydrocarbon resin, related to the weight of the base layer.

11. The polypropylene film in accordance with one or several of the claims 1 through 10, **characterized in that** the base layer contains an antistatic agent, preferably tertiary aliphatic amine.

12. The polypropylene film in accordance with one or several of the claims 2 through 11, **characterized in that** the film is transparent and has a thickness of from 4 to 80 μm.

13. The polypropylene film in accordance with one or several of the claims 2 through 11, **characterized in that** the film is opaque and/or white and has a maximum translucency of 70 %.

14. The polypropylene film in accordance with one or several of the claims 1 through 13, **characterized in that** the toplayer/s contains/contain a lubricant, preferably polydimethylsiloxane, and an antiblocking agent, preferably $SiO_2$.

15. The polypropylene film in accordance with one or several of the claims 1 through 14, **characterized in that** all of the layers of the film contain a neutralizer and a stabilizer.

16. A method of manufacturing a polypropylene film in accordance with claim 1 or 2, **characterized in that** the orientation in the longitudinal direction occurs with a longitudinal stretch ratio of from 5:1 to 9:1 and in the transverse direction with a transverse stretch ration of from 5:1 to 10:1.

17. Use of the polypropylene film in accordance with one or several of the claims 1 through 15 as a packaging film, preferably as a cigarette wrapping film.